# FASCICULE DE BREVET EUROPEEN

(11) **EP 2 202 285 B1**
(45) Date de publication et mention de la délivrance du brevet: **27.02.2013**
(21) Numéro de dépôt: 09290885.4
(22) Date de dépôt: 26.11.2009
(51) Int. Cl.: B03B 9/04, F23G 5/027, F23G 5/033, B09B 3/00, C10B 53/00

(54) **Procédé de séparation par voie humide de solides carbonés après traitement par thermolyse**
Nasstrennverfahren von Kohlenstofffeststoffen nach Thermolyseaufbereitung
Wet method for separating carbonaceous solids after thermolysis treatment

(30) Priorité: 18.12.2008 FR 0807274
(43) Date de publication de la demande: 30.06.2010
(73) Titulaire: IFP Energies nouvelles, 92852 Rueil-Malmaison Cedex (FR)
(72) Inventeur: Jamet, Patrick, 92500 Rueil-Malmaison (FR); Niass, Tidjani, 69003 Lyon (FR); Giroudiere, Fabrice, 69530 Orlienas (FR); Nastoll, Willi, 69007 Lyon (FR)

(56) Documents cités:
- DE-A1- 4 120 842
- FR-A1- 2 678 850
- FR-A1- 2 722 436
- FR-A1- 2 791 281
- US-A1- 2004 168 621

## Description

La présente invention concerne le domaine de la thermolyse, et plus particulièrement un procédé de séparation par voie humide de solides carbonés après traitement par thermolyse.

La thermolyse des déchets est un procédé thermique de transformation d'une charge hétérogène, contenant une fraction organique, des métaux et des inertes, en combustibles et en matériaux recyclables. La charge hétérogène peut être : des ordures ménagères, des déchets industriels banals, des résidus de broyage automobile, des pneumatiques usagés, de la biomasse au sens large du terme ou un mélange de ces différents substrats. Dans le procédé de thermolyse, la charge se décompose, en absence d'air et sous l'effet de la température, en un gaz combustible (appelé gaz de thermolyse) et en un résidu solide formé par le mélange de solides carbonés, composés de carbone ou coke pulvérulent, avec des métaux ferreux et non ferreux et des inertes non transformés incluant des verres, porcelaines, sables, cailloux (le mélange carbone pulvérulent plus inertes fins étant appelé "carbor™). On trouve également dans ce mélange une certaine quantité d'organiques incuits.

Il est nécessaire pour une valorisation ultérieure, que ces produits soient séparés Cependant cette séparation est très difficile, notamment par le fait que leurs tailles, compositions et comportements physiques sont très hétérogènes. D'autre part, lors d'une éventuelle valorisation il peut être nécessaire de réaliser une purification, notamment pour éliminer le chlore présent en fin de thermolyse afin de ne pas dépasser un seuil maximum demandé par l'utilisateur et/ou imposé par les réglementations. Il est également nécessaire de recycler et/ou passer dans un bassin/bac de décantation les eaux utilisées pour leur purification et pour minimiser les risques de pollution.

Il est connu différents brevets concernant la thermolyse, par exemple le brevet FR 2 822 527, et mentionnant succinctement le principe consistant à récupérer séparément les produits issus de la thermolyse pour les valoriser.

Il peut être cité trois brevets pertinents abordant de manière un peu plus détaillée le traitement des déchets après thermolyse: le brevet FR 2 678 850, le brevet FR 2 722 436 et le brevet FR 2 791 281.

Ces brevets dans leur ensemble ignorent ou ne prennent pas en compte la très grande hétérogénéité en forme, en taille et en densité apparente vis-à-vis de l'eau, des déchets sortant du four de thermolyse, ni leur température élevée (supérieure à 300°C) pouvant entraîner un incendie immédiat de ces déchets à leur sortie. De plus, les circulations d'eau n'y sont pas abordées ou sont présentées d'une façon pouvant mener à un enrichissement en sel des déchets. Le comportement de ces solides carbonés est en général tout à fait inattendu, ce qui rend les procédés antérieurs difficilement applicables à cause des mélanges plongeants (plus dense que l'eau) de carbone avec les métaux et inertes et inversement à cause de la flottabilité de certains métaux (boites de conserves et aluminium fin) mélangés à des incuits flottants et inertes fins avec le carbone. De plus, les pompes et autres moyens de relevage proposés peuvent être source de pannes, bouchages et arrêts fréquents.

Un autre inconvénient de ces procédés est qu'ils ne précisent pas la qualité minimum à atteindre concernant le carbor™ pour qu'il soit valorisable, ni les moyens pour y arriver.

La présente invention a donc pour objet de palier un ou plusieurs des inconvénients de l'art antérieur en proposant un procédé permettant de séparer les déchets obtenus en sortie d'un traitement par thermolyse de façon à permettre leur traitement en vue d'une éventuelle valorisation, tout en limitant les risques de pollution.

Pour cela la présente invention propose un procédé de séparation des éléments constituants les solides carbonés obtenus après traitement par thermolyse de déchets dans un ou des fours de thermolyse dans lequel:
- on refroidit les solides carbonés, dès leur sortie du ou des fours, par pulvérisation d'eau, jusqu' à une température inférieure à 150°C,
- on réalise une étape de déchloruration des solides carbonés refroidis et de séparation entre les éléments flottants et les éléments lourds plongeants dans au moins un bac de flottation /classification primaire,
- on sépare les métaux ferreux des métaux non ferreux et des inertes grossiers provenant des éléments lourds plongeants obtenus à l'étape de séparation primaire,
- on concentre le mélange de carbone pulvérulent et d'inertes fins provenant des éléments légers flottants obtenus à l'étape de séparation primaire,
- on essore le mélange de carbone pulvérulent et d'inertes fins.

Selon un mode de réalisation de l'invention on sèche le mélange de carbone pulvérulent et d'inertes fins après l'étape d'essorage, à une température inférieure ou égale à 110°C.

Selon un mode de réalisation de l'invention on réalise une étape de dessalement et au moins une étape de décantation pour purifier l'eau utilisée et permettre son recyclage.

Dans un mode de réalisation de l'invention on fait tomber par gravité les solides carbonés, dès leur sortie des fours, sur un moyen de transport reliant les fours au bac de flottation /classification primaire.

Selon un mode de réalisation de l'invention on fait plonger les solides carbonés dans un bac de flottation/classification primaire, plein d'eau, afin de compléter la déchloruration, ce bac de flottation/classification primaire étant équipé d'un barboteur pouvant tourner dans les deux sens.

Selon un mode de réalisation de l'invention on effectue une agitation par injection d'air dans le bac de flottation/classification primaire lors de l'étape de déchloruration et de séparation.

Selon un mode de réalisation de l'invention on sépare les flottants grossiers des flottants fins avec une grille installée à la sortie de la surverse du bac de flottation/classification primaire.

Selon un mode de réalisation de l'invention on envoie le mélange flottant de carbone pulvérulent et d'inertes fins dans un moyen de filtration de maille inférieure ou égale à 250 microns afin d'en extraire l'eau salée/chlorée, cette eau salée étant envoyée dans une unité de dessalement pour pouvoir être recyclée.

Selon un mode de réalisation de l'invention on envoie le mélange filtré et dessalé de carbone pulvérulent et d'inertes fins dans un classificateur à fins permettant d'éliminer une partie des inertes et petits métaux contenus dans le mélange de carbone pulvérulent et d'inertes fins.

Selon un mode de réalisation de l'invention on extrait les inertes plongeants dans le classificateur à fins par un moyen d'extraction et on lave les inertes ainsi extraits des particules de carbone qui pourrait y rester accrochées ou collées en les arrosant à contre courant sur le moyen d'extraction.

Selon un mode de réalisation de l'invention on réalise un tamisage du mélange flottant de carbone pulvérulent et d'inertes fins dans le classificateur à fins avec un moyen de tamisage vibrant, le refus de ce tamisage, constitué de mélange grossier de carbone pulvérulent et d'inertes fins, étant ensuite essoré avec un moyen d'essorage.

Selon un mode de réalisation de l'invention on réalise un tamisage des lourds plongeants du bac de flottation/classification primaire, après les en avoir extrait, avec un moyen de tamisage soit vibrant, soit tournant pour séparer les éléments grossiers des éléments fins.

Selon un mode de réalisation de l'invention on envoie les éléments grossiers sur un tapis roulant au dessus duquel on dispose un électro-aimant pour en extraire et évacuer les composants ferreux.

Selon un mode de réalisation de l'invention on dévie les éléments métalliques non ferreux par une roue polaire située à l'extrémité du tapis de transport et récupérés par un déflecteur orientable en angle et en hauteur.

Selon un mode de réalisation de l'invention après la séparation des métaux, on envoie les inertes grossiers restant et les incuits dans un bac de classification pour séparer les inertes grossiers qui coulent, des incuits qui flottent.

Selon un mode de réalisation de l'invention on extrait les inertes grossiers de leur bac de classification par un moyen d'extraction qui sera arrosé à contre courant pour purifier les inertes grossiers de carbone qui pourraient rester collés, les inertes flottants sont eux renvoyés au début du procédé après passage dans un broyeur, ou en début de thermolyse.

Selon un mode de réalisation de l'invention on envoie le mélange fin de carbone pulvérulent et d'inertes fins passant les différents moyens de tamisage, associé à de l'eau, dans un bac décanteur pour clarifier l'eau qui peut être recyclée.

Selon un mode de réalisation de l'invention on envoie le contenu du fond du bac décanteur par pompage ou par gravité dans un bac d'homogénéisation muni d'un système d'agitation.

Selon un mode de réalisation de l'invention on ajoute dans le bac d'homogénéisation un additif pour floculer les très fines particules solides pour éviter le bouchage du moyen d'essorage postérieur.

Selon un mode de réalisation de l'invention on envoie tout ou partie du contenu du bac d'homogénéisation vers un moyen d'essorage soit filtrant, soit centrifuge, pour réduire sa teneur en eau à moins de 45%.

Selon un mode de réalisation de l'invention on envoie le contenu du bac d'homogénéisation vers un moyen d'essorage lorsque la concentration en solides du bac est au moins de 30 grammes par litre pour permettre un essorage efficace.

D'autres caractéristiques et avantages de l'invention seront mieux compris et apparaîtront plus clairement à la lecture de la description faite, ci-après, en se référant à la figure annexée et donnée à titre d'exemple, représentant une vue schématique d'une variante du procédé selon l'invention.

Le procédé de séparation par voie humide de solides carbonés selon l'invention est composé de plusieurs étapes.

On entend par solides carbonés les produits obtenus après thermolyse de déchets, incluant également des résidus de déchets ayant résisté à la thermolyse.

On entend par "carbor™", selon l'art antérieur, le produit final composé de carbone/coke pulvérulent mélangé à une certaine proportion d'inertes fins, qui peut être réutilisé comme source d'énergie combustible.

### Traitement primaire:

Les solides carbonés (1) issus du ou des four(s) de thermolyse sont dans un premier temps refroidis pour éviter qu'ils ne s'enflamment en présence de l'oxygène présent dans l'air. Pour cela les solides carbonés (1) dès leur sortie du sas du four sont envoyés par gravité et/ou système de vis dans un moyen de transport fermé (101) où ils sont mouillés par pulvérisation (2) à leur sortie du four jusqu'à ce que leur température descende en dessous de 150°C, et de préférence en dessous de 100°C. Afin de limiter le nombre d'équipements de relevage tels que pompes et élévateurs, qui ont tendance à tomber en panne, il est nécessaire que la sortie des fours de thermolyse soit au moins en général à 5 ou 6 m, et avantageusement à 8 à 9 m, de hauteur par rapport au sol de l'unité de traitement, pour permettre le plus possible un flux gravitaire des solides carbonés et des eaux.

Au cours de l'étape de pulvérisation d'eau, il est important que les solides carbonés (contenant notamment le carbone pulvérulent et les fines inertes appelées carbor™) ne soient pas trop mouillés pour éviter une trop grande consommation d'eau et des débordements dans les équipements venant en aval. Les solides carbonés sont donc mouillés avec une quantité minimum d'eau excédentaire, la quantité d'eau étant juste nécessaire, donc contrôlée pour la température désirée. Lors de cette étape de mouillage la solubilisation du chlore présent dans les solides carbonés (principalement sous forme de chlorure de sodium) va commencer à se faire. La pulvérisation peut se faire par tous moyens connus de l'homme du métier. Le diamètre intérieur de chaque injecteur de pulvérisation doit être au moins de 2 mm pour éviter leur bouchage.

Alternativement, on peut aussi faire tomber les solides carbonés directement dans un bac d'eau puis les relever avec un système de vis ou similaire (101/101').

L'eau injectée à ce stade (2) sera de l'eau claire, dessalée ou non salée, idéalement provenant du bassin de récupération des eaux pluviales, ou alternativement du bassin de décantation ou d'un bac de décantation.

Ce moyen de transport fermé (101) est prévu avec un système de by-pass (3) pour évacuer les solides carbonés directement dans une benne (301) en cas d'arrêt de l'unité de traitement qui suit, pour ne pas arrêter les fours de thermolyse.

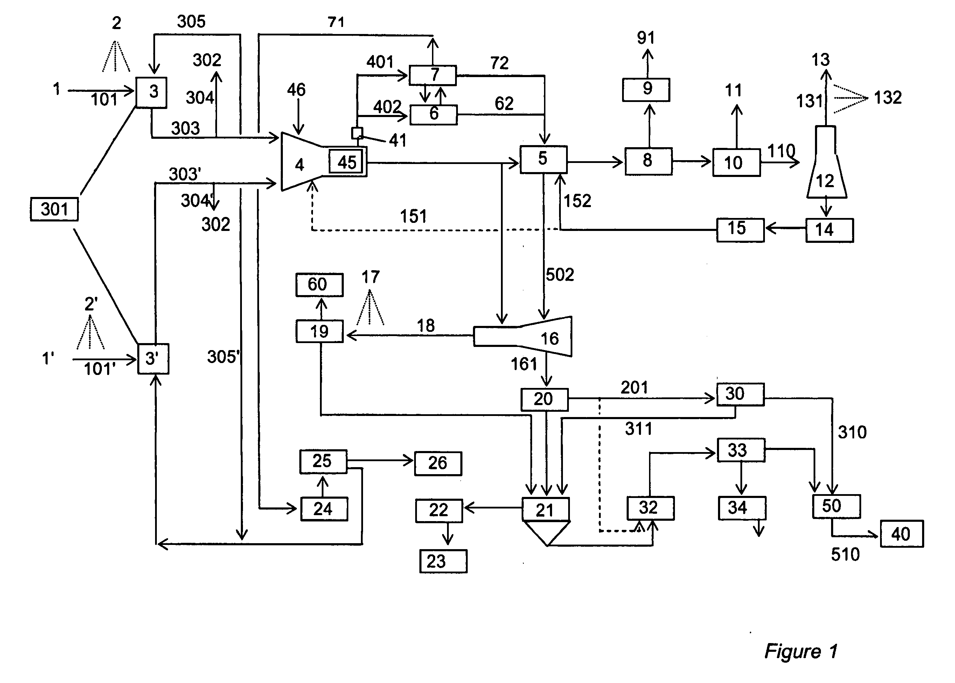

Comme illustré sur la figure 1 le procédé selon l'invention peut être mis en oeuvre dans un dispositif comportant une double entrée des déchets. Dans ce cas, les solides carbonés arrivent par un deuxième moyen de transport fermé (101'), où ils sont également mouillés par pulvérisation (2'), qui les transporte jusqu'à un deuxième système de by-pass (3').

Ce processus dégageant beaucoup de vapeur d'eau et éventuellement un peu d'autres gaz (notamment CO2) et de poussières, les fumées s'échappant de ce moyen de transport fermé (101, 101') sont canalisées par le conduit (304, 304') vers un moyen de condensation et de traitement de fumées (302).

A l'issue de cette étape les solides carbonés mouillés sont déversés par gravité par des moyens de déversement (303, 303') dans un bac (4) de flottation/classification primaire assurant aussi leur déchloruration. La déchloruration est une étape nécessaire afin de respecter les normes qui stipulent de ne pas dépasser 0,5% de Chlore dans le carbor™ et autres résidus finaux. Ce bac de flottation/classification (4) est équipé d'un appareil de type barboteur (45) tournant par exemple dans un sens opposé à la surverse produite par le classificateur (4) pour faire plonger le carbone pulvérulent et les fines inertes (carbor™) dans l'eau et permettre de compléter la déchloruration de ces produits. Pendant cette étape de déchloruration une agitation peut être réalisée. Avantageusement, cette agitation peut être réalisée par un système d'injection d'air (46) qui facilitera ensuite la séparation des éléments légers et en particulier du carbone pulvérulent.

### Traitement des flottants

La surverse du bac primaire (4) est équipée d'une grille (41) d'un espacement passant inférieur à 22 mm, pour séparer et éliminer ou recycler les incuits et éléments métalliques flottants et laisser passer les fines de carbor™ (carbone+inertes fins) dans le(s) conduit(s) (401, 402).

Cette grille (41) peut être disposée de façon à former une pente vers l'extérieur permettant ainsi de faire tomber le refus de la grille (41) dans un récipient, mobile ou non, qui va collecter les flottants grossiers (incuits tels que bois de gros diamètre, gros éléments plastiques, pommes de terre, etc... et quelques boîtes de conserves) qui seront renvoyés en tête de thermolyse, éventuellement après un broyage (non illustré). La pente de la grille doit être en général d'au moins 30° et avantageusement supérieure ou égale à 45°. Pour éviter une inondation en extrémité de cette grille par l'eau qui ruisselle sur les barrettes, on fixera sur ces barrettes un dispositif pour faire tomber les gouttes avant leur extrémité pour rejoindre l'eau passante. Avantageusement, ce dispositif peut être une simple excroissance de métal ou de soudure vers la partie inférieure.

Le passant de la grille (41) provenant de la surverse du bac primaire (4), est constitué d'eau salée et de carbor™, éventuellement accompagnés d'un peu de fines particules d'aluminium.

Ce fluide passant est envoyé par gravité par des moyens de transport (401, 402) dans un système de filtration performant (6 et 7), avantageusement de type filtre rotatif ou filtre à bande, permettant de séparer la majorité de l'eau salée du carbor™. Pour cela, la maille de tamisage de ce filtre doit être inférieure ou au plus égale à 250 microns. Un arrosage interne limité de ce moyen de filtration, avec de l'eau non salée, permettra de décoller le gâteau de carbor™. Ce moyen de filtration sera doublé (6 et 7) avec un système de by-pass de l'un à l'autre pour éviter d'arrêter l'unité en cas de panne de l'un d'eux.

A l'issu de cette étape de filtration le carbor™ est ainsi dessalé.

L'eau salée récupérée après cette étape de filtration, est envoyée par le conduit (71) dans une unité de dessalement (25) afin de la recycler. Un moyen de décantation ou un filtre (24) peut éventuellement précéder l'unité de dessalement (25) pour éviter que cette dernière ne se bouche avec les faibles quantités de carbor™ ultra fin qui pourraient encore se trouver en suspension dans l'eau.

Le refus de ce moyen de filtration (6, 7), constitué de carbor™, est envoyé par les conduits (72, 62), soit d'abord dans le moyen de tamisage (5) pour en séparer les petites boulettes d'aluminium, et ensuite (par le conduit 502) dans un bac classificateur secondaire (16) à fins, soit directement dans le bac classificateur secondaire (16). Le choix de passer directement dans le bac secondaire se fait en fonction des mailles granulométriques choisies en amont.

Ce bac classificateur à fins (16) a pour rôle essentiel de faire flotter le carbor™ en surface et le séparer d'une bonne partie des inertes fins qui vont couler au fond du bac, afin d'enrichir son pouvoir calorifique final. Ce classificateur pourra en option, être agité par un moyen mécanique ou par injection d'air pour favoriser la séparation du carbor™ et des inertes fins.

Le flottant de ce classificateur (16) est envoyé par des moyens de transport (161) sur un moyen de tamisage vibrant ou tournant (20) pour séparer les éléments grossiers supérieurs à 500 microns des plus fins. En effet, les particules grossières de carbor™ risqueraient de boucher certaines tuyauteries ou pompes en aval.

Ce carbor™ grossier est ensuite envoyé par des moyens de transport (201) pour être essoré vers un moyen d'essorage (30), qui peut être avantageusement une essoreuse centrifuge ou un filtre à bande ou un filtre presse. Puis envoyé par des moyens de transport (310) vers le moyen de séchage final (50) et enfin, par des moyens de transport (510) vers le silo d'expédition (40). Ce silo d'expédition (40) est installé à une hauteur telle que sa base de chargement est au dessus des bennes de camions de transport.

L'eau extraite de ce moyen d'essorage (30), contenant encore un peu de carbor™ fin, va rejoindre par le conduit (311) le bac de décantation (21), de même que l'eau chargée de carbor™ fin passant le moyen de tamisage (20).

Les plongeants du classificateur à fin (16) sont essentiellement constitués d'inertes fins. Ils sont extraits du classificateur à fins (16) par un moyen d'extraction (18) tel que une vis sans fin ou un système de râteaux. Pour renvoyer vers le classificateur (16) les particules de carbone qui sont entraînées avec ces inertes fins on asperge avec une pulvérisation d'eau ou un simple arrosage (17) ce moyen d'extraction (18). Ainsi, l'eau qui redescend vers le classificateur (16) à contre courant du moyen (18) ramène la plupart des particules légères de carbone dans le classificateur (16) où elles se mettent à flotter.

Les inertes fins extraits par le moyen d'extraction (18) sont ensuite déversés dans une benne à inertes fins (60) pour être soit valorisés/utilisés, soit envoyés en décharge.

### Traitement des lourds plongeants:

Le classificateur primaire (4) comporte un système de vis ou râteau élévateur court, qui va permettre de faire remonter à partir du fond du bac de flottation/classification primaire (4) les produits lourds (métaux, verres, porcelaine, et le carbor™ dense etc...) pour les faire déverser ensuite par gravité dans un moyen de tamisage (5) pour leur séparation granulométrique par exemple de type trommel ou grille de rails vibrante. La taille de la maille passante de ce moyen de tamisage est égale à "d"; "d" doit être inférieur ou égal à 10 mm et idéalement se situer autour de 8 mm. Ce moyen de tamisage est arrosé par pulvérisation, pour nettoyer les métaux et inertes des particules de carbor™ qui y sont collées.

Le refus de ce moyen de tamisage (5) de taille supérieure à "d" ,constitué de métaux, gros inertes, quelques incuits, est envoyé sur un tapis à bande (8) pour en séparer les métaux. Les métaux ferreux (91) sont séparés par un électro-aimant (9) ("overband"), et les non ferreux (11) sont déviés par une première roue polaire (10) (courants de foucault/ "Eddy Currents") d'intensité réglable. A la sortie de la roue polaire, des volets orientables et de hauteur réglable permettront de séparer les flux des métaux déviés des flux d'inertes et d'incuits.

Après récupération des métaux, le reste des produits sur le tapis, inertes (verres, porcelaine, graviers etc..) ainsi que les incuits passent, soit par gravité, soit par des moyens de transport (110) dans un autre classificateur (12) dit classificateur à inertes grossiers, pour séparer les incuits des inertes grossiers. Les incuits et quelques boulettes de carbor™ grossier flottent et sont re-broyés dans un petit broyeur (14) puis recyclés (15) soit dans le moyen de tamisage (5) par des moyens de transport (152), soit dans le bac/classificateur primaire (4) par des moyens de transport (151). Leur flottabilité est augmentée par une agitation de l'eau du classificateur à inertes grossiers (12), avantageusement par injection d'air.

Les inertes grossiers (13) sont récupérés du fond de ce classificateur à inertes grossiers (12) par une vis sans fin ou un râteau (131), ou tout autre équipement de même fonctionnalité, connu de l'homme du métier, puis envoyés dans une benne qui leur est dédiée. Un lavage de cette vis ou râteau par une pulvérisation/jet d'eau (132) permet de ramener les incuits éventuels ou carbor™ qui n'auraient pas flotté vers le classificateur à inertes grossiers, améliorant ainsi la qualité des inertes, qui pour être valorisables doivent contenir moins de 5% de carbone.

Le procédé peut comporter une étape supplémentaire sur un deuxième tapis en série, équipé d'une deuxième roue polaire, pour séparer les restes d'aluminium non déviés par la première roue polaire se trouvant sous forme de boulettes et de feuilles minces. L'humidité sur les tapis doit être réduite au minimum pour éviter leurs disfonctionnement. Avantageusement, ce tapis (8) peut être légèrement filtrant pour permettre l'évacuation du film d'eau restante, ce qui favorise le décollement et la séparation des boulettes ou feuilles d'aluminium de petite taille.

Le passant du trommel (5), c'est à dire les éléments de taille inférieure à 10 mm et de préférence inférieure à 8 mm est constitué de carbor™ et d'inertes fins et tout petits éléments métalliques. Ce passant passe ensuite dans un classificateur à fins (16) décrit plus haut. Les inertes fins (18) tombent au fond et sont récupérés par une vis sans fin ou un système à râteaux. Vers le haut de la vis/râteau, une pulvérisation (17) ou un jet d'eau permet de laver les particules de carbor™ qui restent accrochées, pour les ramener à la surface de l'eau du classificateur (16). Si les inertes ainsi produits contiennent encore trop de carbor™, un deuxième étage de séparation peut encore être installé de type cyclone, ou cellule de flottation ou autre classificateur/décanteur ou table à fissures (19).

Le flottant sur le classificateur à fins (16) est constitué essentiellement de carbor™ qui est envoyé, avec de l'eau, sur un moyen de tamisage vibrant ou tournant (20), par exemple de type "sweco". Ce moyen de tamisage vibrant (20), retient les grosses particules de carbor™ de taille supérieure à 500µ et de préférence supérieure à 1000µ qui sont séchées ou essorées séparément, tel que décrit plus haut, pour ne pas entraîner des bouchages ou problèmes dans les bacs en aval. Le passant de carbor™ de taille inférieure à 500µ ou à 1000µ, est envoyé dans des cuves intermédiaires, décanteur (21) puis dans un bac d'homogénéisation (32), puis essoré avec un moyen d'essorage (33), tel que un filtre-presse ou un filtre à bande ou par essoreuse centrifuge. Ce dernier carbor™ fin représente de loin la plus grande proportion de carbor™ produit. Pour son bon fonctionnement, le bac d'homogénéisation (32) est équipé d'un moyen d'agitation, d'un appareil de mesure de niveau et d'un appareil de mesure de concentration en solides. Les produits (eau + carbor™) du bac d'homogénéisation ne seront envoyés sur le moyen d'essorage (33) que lorsque la concentration en solides atteindra au minimum 30 g/litre et de préférence au moins 60 g/l pour en permettre un essorage efficace.

Pour empêcher le bouchage de ce moyen d'essorage (33) il est très important d'injecter régulièrement dans le bac d'homogénéisation (32), en petites quantités, un floculant, avantageusement de type polymère hydrosoluble, ou à défaut de la chaux, ou tout autre connu de l'homme de métier, pour agglomérer les trop fines particules de carbor™.

Le carbor™ obtenu par le procédé selon l'invention, et après l'essorage (33), conserve une certaine humidité de l'ordre de 30% à 45%, ce qui n'est pas idéal en pouvoir calorifique. Selon son utilisation ultérieure le carbor™ est soit envoyé directement dans des trémies/silos (40) par un moyen de transport (510), généralement incliné ou vertical, soit subit un complément de séchage (50) avant d'être envoyé dans les trémies/silos.

Par contre, si un carbor™ nettement plus sec est nécessaire, avant l'envoi aux silos, une étape de séchage additionnelle (50) est installée en utilisant de préférence les circuits d'air chaud ou de gaz brûlés produits dans l'usine. Ce moyen de séchage est fermé pour éviter les envols de poussières. Avantageusement, la température dans ce moyen de séchage sera régulée entre 60 ° et 80°C. En aucun cas la température à l'intérieur ne devra dépasser 110° car il y aurait risque d'incendie du carbor™.

Le pouvoir calorifique de ce carbor™ par unité de poids est ainsi largement accru. Ce carbor™ séché rejoint ensuite le silo (40) par un moyen de transport (51) de type tapis roulant, élévateur à godets ou autre connu de l'homme de métier, avant d'être chargé pour un utilisateur potentiel.

Les eaux passant le moyen d'essorage (33) sont des eaux claires et seront stockées dans un bac ou bassin particulier (34) d'eau claire puis réutilisées comme décrit ci-dessus notamment dans les pulvérisateurs/injecteurs nécessaires le long de ce circuit.

De la même façon les eaux clarifiées (22) issues du décanteur (21) sont envoyées vers un circuit de distribution (23) pour être recyclées.

Le procédé permet ainsi de séparer l'essentiel des résidus solides après thermolyse, qui sont de taille et de nature très hétérogènes, pour les valoriser de façon optimale. On obtient donc:
- un stock de "carbor™" constitué de carbone pulvérulent et en moindre proportion d'inertes très fins, qui peut être utilisé comme combustible de pouvoir calorifique moyen, dans des cimenteries, ou fours pour industrie sucrière, ou pour la génération d'électricité.
- un stock de métaux ferreux recyclables
- un stock de métaux non ferreux (aluminium, cuivre, bronze, zinc etc...) recyclables.
- un stock d'inertes, qui peuvent être utilisés en petits remblais de chemins, tranchées etc...
- un stock mineur de mixtes au-delà de la possibilité économique de séparation, qu'on devra envoyer en décharge; et auquel on joindra les petites quantités de sel produites.

Pour minimiser l'utilisation d'eau venant du réseau extérieur, et pour collecter les eaux de nettoyage de l'usine ou autres eaux contenant du carbor™ en suspension, on doit aménager en extérieur au moins 3 bassins: l'un pour collecter les eaux pluviales servant dans les injections d'eau claire et aussi de réserve incendie, un autre bassin de décantation des eaux contenant du carbor™ en suspension pour en utiliser l'eau clarifiée après dépôt du carbor™ au fond et un troisième bassin permettant le nettoyage du bassin de décantation ou de différents bacs, sans arrêter l'usine.

Lors des nettoyages périodiques, le carbor™ déposé dans le bassin de décantation peut être renvoyé dans le circuit de traitement de l'usine pour l'essorer et le valoriser.

Pour éviter que l'eau non salée devienne salée, suite aux multiples recyclages, on effectue une purge complète régulièrement, en remettant de l'eau pluviale.

L'eau qui disparaît par évaporation est aussi complétée par de l'eau pluviale ou de l'eau venant du bassin de décantation.

Selon les configurations géométriques adoptées, l'homme du métier sait installer les pompes, purges et vannes nécessaires sur les circuits d'eau.

Il doit être évident pour l'homme du métier que la présente invention n'est pas limitée aux détails de structure donnés ci-dessus et permet des modes de réalisation sous de nombreuses autres formes équivalentes sans s'éloigner du domaine d'application de l'invention. Par conséquent, les présents modes de réalisation doivent être considérés à titre d'illustration, et peuvent être modifiés sans toutefois sortir de la portée définie par les revendications jointes.

## Revendications

1. Procédé de séparation des éléments constituants les solides carbonés obtenus après traitement par thermolyse de déchets dans un ou des fours de thermolyse dans lequel:
- on refroidit les solides carbonés (1), dès leur sortie du ou des fours, par pulvérisation d'eau (2), jusqu'à une température inférieure à 150°C,
- on réalise une étape de déchloruration des solides carbonés refroidis et de séparation entre les éléments flottants et les éléments lourds plongeants dans au moins un bac de flottation /classification primaire (4),
- on sépare les métaux ferreux des métaux non ferreux et des inertes grossiers provenant des éléments lourds plongeants obtenus à l'étape de séparation primaire,
- on concentre le mélange de carbone pulvérulent et d'inertes fins provenant des éléments légers flottants obtenus à l'étape de séparation primaire,
- on essore le mélange de carbone pulvérulent et d'inertes fins.

2. Procédé selon la revendication 1 dans lequel on sèche le mélange de carbone pulvérulent et d'inertes fins après l'étape d'essorage, à une température inférieure ou égale à 110°C.

3. Procédé selon une des revendications 1 ou 2 dans lequel on réalise une étape de dessalement et au moins une étape de décantation pour purifier l'eau utilisée et permettre son recyclage.

4. Procédé selon une des revendications 1 à 3 dans lequel on fait tomber par gravité les solides carbonés, dés leur sortie des fours, sur un moyen de transport (303, 303') reliant les fours au bac de flottation /classification primaire (4).

5. Procédé selon une des revendications 1 à 4, dans lequel on fait plonger les solides carbonés dans un bac de flottation/classification primaire (4), plein d'eau, afin de compléter la déchloruration, ce bac de flottation/classification primaire (4) étant équipé d'un barboteur (45) pouvant tourner dans les deux sens.

6. Procédé selon l'une des revendications 1 à 5, dans lequel on effectue une agitation par injection d'air dans le bac de flottation/classification primaire (4) lors de l'étape de déchloruration et de séparation.

7. Procédé selon l'une des revendications 1 à 6, dans lequel on sépare les flottants grossiers des flottants fins avec une grille (41) installée à la sortie de la surverse du bac de flottation/classification primaire (4).

8. Procédé selon l'une des revendications 1 à 7, dans lequel on envoie le mélange flottant de carbone pulvérulent et d'inertes fins dans un moyen de filtration (6, 7) de maille inférieure ou égale à 250 microns afin d'en extraire l'eau salée/chlorée, cette eau salée étant envoyée dans une unité de dessalement (25) pour pouvoir être recyclée.

9. Procédé selon l'une des revendications 1 à 8, dans lequel on envoie le mélange filtré et dessalé de carbone pulvérulent et d'inertes fins dans un classificateur à fins (16) permettant d'éliminer une partie des inertes et petits métaux contenus dans le mélange de carbone pulvérulent et d'inertes fins.

10. Procédé selon la revendication 9, dans lequel on extrait les inertes plongeants dans le classificateur à fins (16) par un moyen d'extraction (18) et on lave les inertes ainsi extraits des particules de carbone qui pourrait y rester accrochées ou collées en les arrosant à contre courant sur le moyen d'extraction (18).

11. Procédé selon l'une des revendications 1 à 10, dans lequel on réalise un tamisage du mélange flottant de carbone pulvérulent et d'inertes fins dans le classificateur à fins (16) avec un moyen de tamisage (20) vibrant, le refus de ce tamisage, constitué de mélange grossier de carbone pulvérulent et d'inertes fins, étant ensuite essoré avec un moyen d'essorage (33).

12. Procédé selon l'une des revendications 1 à 11, dans lequel on réalise un tamisage des lourds plongeants du bac de flottation/classification primaire (16), après les en avoir extrait, avec un moyen de tamisage (20) soit vibrant, soit tournant pour séparer les éléments grossiers des éléments fins.

13. Procédé selon l'une des revendications 1 à 12, dans lequel on envoie les éléments grossiers sur un tapis roulant au dessus duquel on dispose un électroaimant (9) pour en extraire et évacuer les composants ferreux.

14. Procédé selon l'une des revendications 1 à 13, dans lequel on dévie les éléments métalliques non ferreux par une roue polaire (10) située à l'extrémité du tapis de transport et récupérés par un déflecteur orientable en angle et en hauteur.

15. Procédé selon l'une des revendications 1 à 14, dans lequel, après la séparation des métaux, on envoie les inertes grossiers restant et les incuits dans un bac de classification (12) pour séparer les inertes grossiers qui coulent, des incuits qui flottent.

16. Procédé selon la revendication 15, dans lequel on extrait les inertes grossiers de leur bac de classification (12) par un moyen d'extraction qui sera arrosé à contre courant pour purifier les inertes grossiers de carbone qui pourrait rester collé, les inertes flottants sont eux renvoyés au début du procédé après passage dans un broyeur (14), ou en début de thermolyse.

17. Procédé selon l'une des revendications 1 à 16, dans lequel on envoie le mélange fin de carbone pulvérulent et d'inertes fins passant les différents moyens de tamisage, associé à de l'eau, dans un bac décanteur (21) pour clarifier l'eau qui peut être recyclée.

18. Procédé selon la revendication 17, dans lequel on envoie le contenu du fond du bac décanteur par pompage ou par gravité dans un bac d'homogénéisation (32) muni d'un système d'agitation.

19. Procédé selon l'une des revendications 1 à 18, dans lequel on ajoute dans le bac d'homogénéisation (32) un additif pour floculer les très fines particules solides pour éviter le bouchage du moyen d'essorage postérieur.

20. Procédé selon la revendication 19, dans lequel on envoie tout ou partie du contenu du bac d'homogénéisation (32) vers un moyen d'essorage (33) soit filtrant, soit centrifuge, pour réduire sa teneur en eau à moins de 45%.

21. Procédé selon l'une des revendications 1 à 20, dans lequel on envoie le contenu du bac d'homogénéisation (32) vers un moyen d'essorage (33) lorsque la concentration en solides du bac est au moins de 30 grammes par litre pour permettre un essorage efficace.

## Claims

1. A process for separating the constituent elements of carbonaceous solids obtained after treating waste by thermolysis in one or more thermolysis furnaces, in which:
• the carbonaceous solids (I) are cooled as soon as they leave the furnace or furnaces, by spraying water (2), to a temperature below 150°C;
• a step for dechlorination of the cooled carbonaceous solids and separation of the floating elements from the submerged heavy elements is carried out in at least one primary flotation/classification tank (4);
• the ferrous metals arc separated from the non-ferrous metals and the oversized inerts deriving from the submerged heavy elements obtained in the primary separation step;
• the mixture of powdered carbon and fine inerts deriving from the floating light elements obtained in the primary separation step is concentrated;
• the mixture of powdered carbon and fine inerts is drained.

2. A process according to claim 1 in which, after the draining step, the mixture of powdered carbon and fine inerts is dried at a temperature of 110°C or less.

3. A process according to claim 1 or claim 2, in which a desalination step and at least one settling step are carried out to purify the water used and to allow it to be recycled.

4. A process according to one of claims 1 to 3, in which the carbonaceous solids are caused to fall under gravity as soon as they leave the outlet from the furnaces onto a conveying means (303, 303') linking the furnaces to the primary flotation/classification tank (4).

5. A process according to one of claims 1 to 4, in which the carbonaceous solids arc submerged in a primary flotation/classification tank (4) which is full of water in order to complete the dechlorination, said primary flotation/classification tank (4) being equipped with a scrubber (45) which can turn in both directions.

6. A process according to one of claims 1 to 5, in which agitation is carried out by injecting air into the primary flotation/classification tank (4) during the dechlorination and separation step.

7. A process according to one of claims 1 to 6, in which the oversized floating elements arc separated from the fine floating elements with a screen (41) installed at the outlet from the overflow of the primary flotation/classification tank (4).

8. A process according to one of claims 1 to 7, in which the floating mixture or powdered carbon and fine inerts is sent to a filtration means (6, 7) with a mesh of 250 microns or less in order to extract salinated/chlorinated water therefrom, said salinated water being sent to a desalination unit (25) so that it can be recycled.

9. A process according to one of claims 1 to 8, in which the filtered desalinated mixture of powdered carbon and line inerts is sent to a fines classifier (16) in order to eliminate a portion of the inerts and small metal particles contained in the mixture of powdered carbon and fine inerts.

10. A process according to claim 9, in which the inerts submerged in the fines classifier (16) arc extracted by an extraction means (18) and carbon particles that might have remained attached or stuck therein are washed out of the inerts extracted thereby by counter-current spraying of the extraction means (18).

11. A process according to one of claims 1 to 10, in which the floating mixture of powdered carbon and fine inerts is screened in the fines classifier (16) with a vibrating screening means (20), the refuse from this screening, constituted by a mixture of oversized powdered carbon and fine inerts, then being drained with a draining means (33).

12. A process according to one of claims 1 to 11, in which screening of the heavy material submerged in the primary flotation/classification tank (16), after having extracted it, is carried out with a screening means (20) which is either vibrating or turning in order to separate the oversized elements from the fine elements.

13. A process according to one of claims I to 12, in which the oversized elements are sent over a conveyor belt above which an electro-magnet (9) is disposed in order to extract and evacuate the ferrous components.

14. A process according to one of claims 1 to 13, in which the non-ferrous metallic elements are deflected by a magnet wheel (10) located at the end of the conveyor belt and recovered by means of a deflector the angle and height of which can be orientated.

15. A process according to one of claims 1 to 14 in which, after separating the metals, the remaining oversized inerts and the non-coked material are sent to a classification tank (12) to separate the flowing oversized inerts from the inerts which float.

16. A process according to claim 15, in which the oversized inerts are extracted from their classification tank (12) by an extraction means that will be counter-current sprayed in order to purify the oversized inerts of carbon that could have remained stuck, the floating inerts being returned to the start of the process after passing through a mill (14), or to the start of thermolysis.

17. A process according to one of claims 1 to 16, in which the fine mixture of powdered carbon and fine inerts passing through the different screening means is sent, along with water, to a settler tank (21) to clarify the water, which can be recycled.

18. A process according to claim 17, in which the contents of the bottom of the settler tank are sent, by pumping or under gravity, to a homogenization tank (32) provided with an agitation system.

19. A process according to one of claims 1 to 18, in which an additive is added to the homogenization tank (32) in order to flocculate the very fine solid particles to avoid blocking the downstream draining means.

20. A process according to claim 19, in which all or a portion of the contents of the homogenization tank (32) is sent to a draining means (33) which is either a filter or a centrifuge to reduce its water content to less than 45%.

21. A process according to one of claims 1 to 20, in which the contents of the homogenization tank (32) are sent to a draining means (33) when the concentration of solids in the tank is at least 30 grams per litre, to ensure effective draining.

## Patentansprüche

1. Verfahren zum Trennen von Elementen, welche die kohlenstoffhaltigen Feststoffe bilden, die nach der Thermolysebehandlung von Abfällen in einem oder mehreren Thermolyseöfen gebildet werden, wobei
- die kohlenstoffhaltigen Feststoffe (1), sobald sie den oder die Öfen verlassen, durch Versprühen von Wasser (2) auf eine Temperatur von weniger als 150 °C abgekühlt werden,
- ein Schritt zur Entchlorung der abgekühlten kohlenstoffhaltigen Feststoffe und zur Abtrennung der aufschwimmenden Elemente von den schweren, absinkenden Elementen in mindestens einem primären Flotations/Sortier-Becken (4) durchgeführt wird.
- die Trennung der Eisenmetalle von den Nichteisenmetallen und von den groben Inertstoffen durchgeführt wird, wobei diese aus den schweren, absinkenden Elementen stammen, die im Schritt der primären Abtrennung erhalten werden,
- die Mischung aus pulverförmigem Kohlenstoff und feinen Inertstoffen aufkonzentriert wird, wobei diese aus den leichten aufschwimmenden Elementen stammt, die im Schritt der primären Abtrennung erhalten werden,
- der Mischung aus pulverförmigem Kohlenstoff und feinen Inertstoffen mechanisch Wasser entzogen wird.

2. Verfahren nach Anspruch 1, wobei die Mischung aus pulverförmigem Kohlenstoff und feinen Inertstoffen nach dem Schritt des mechanischen Wasserentzugs bei einer Temperatur von höchstens 110 °C getrocknet wird.

3. Verfahren nach einem der Ansprüche 1 oder 2, wobei ein Entsalzungsschritt und mindestens ein Absetzschritt durchgeführt wird, um das verwendete Wasser zu reinigen und seine Wiederverwendung zu ermöglichen.

4. Verfahren nach einem der Ansprüche 1 bis 3, wobei die kohlenstoffhaltigen Feststoffe, sobald sie die Öfen verlassen, durch die Schwerkraft auf ein Transportmittel (303, 303') fallengelassen werden, welches die Öfen
mit dem primären Flotations/Sortierbecken (4) verbindet.

5. Verfahren nach einem der Ansprüche 1 bis 4, wobei die kohlenstoffhaltigen Feststoffe in ein primäres Flotations/Sortierbecken (4) eingetaucht werden, das mit Wasser gefüllt ist, um die Entchlorung zu vervollständigen, wobei dieses primäre Flotations/Sortierbecken (4) mit einer Gaseinleitungsvorrichtung (48) ausgestattet ist, die sich in beide Richtungen drehen kann.

6. Verfahren nach einem der Ansprüche 1 bis 5, wobei eine Rührbewegung erzielt wird, indem während des Entchlorungs- und Trennschritts Luft in das primäre Flotations/Sortierbecken (4) eingeleitet wird

7. Verfahren nach einem der Ansprüche 1 bis 6, wobei die groben aufschwimmenden Stoffe von den feinen aufschwimmenden Stoffen mittels eines Gitters (41) getrennt werden, das am Austritt des Überlaufs des primären Flotations/Sortierbeckens (4) angeordnet ist.

8. Verfahren nach einem der Ansprüche 1 bis 7, wobei die aufschwimmende Mischung aus pulverförmigem Kohlenstoff und feinen Inertstoffen in ein Filtrationsmittel (6, 7) geleitet wird, dessen Maschenweite höchstens 250 Mikrometer beträgt, um ihr das salzhaltige/chlorhaltige Wasser zu entziehen, wobei dieses Salzwasser in eine Entsalzungseinheit (25) geleitet wird, damit es wiederverwendet werden kann.

9. Verfahren nach einem der Ansprüche 1 bis 8, wobei die filtrierte und entsalzte Mischung aus pulverförmigem Kohlenstoff und feinen Inertstoffen in eine Feinfraktions-Sortieranlage (16) eingeleitet wird, um einen Teil der Inertstoffe und kleinen Metallstücke zu entfernen, die in der Mischung aus pulverförmigem Kohlenstoff und feinen Inertstoffen enthalten ist.

10. Verfahren nach Anspruch 9, wobei die Inertstoffe, die in der Feinfraktions-Sortieranlage (16) absinken, mit Hilfe eines Entnahmemittels (18) entnommen werden und die Kohlenstoffpartikel, welche an den auf diese Weise entnommenen Inertstoffen hängenbleiben und anhaften können, von diesen abgewaschen werden, indem sie auf dem Entnahmemittel (18) im Gegenstrom übergossen werden.

11. Verfahren nach einem der Ansprüche 1 bis 10, wobei die Mischung aus pulverförmigem Kohlenstoff und feinen Inertstoffen, welche in der Feinfraktions-Sortieranlage (16) aufschwimmt, mit einem vibrierenden Siebmittel (20) einer Siebung unterzogen wird, wobei dem Rückstand dieser Siebung, welcher aus einer groben Mischung von pulverförmigem Kohlenstoff und feinen Inertstoffen besteht, anschließend mit einem Wasserentzugsmittel (33) mechanisch Wasser entzogen wird.

12. Verfahren nach einem der Ansprüche 1 bis 11, wobei die Schwerstoffe, die im primären Flotations/Sortierbecken (16) absinken, zunächst entnommen und dann mit einem entweder vibrierenden oder sich drehenden Siebungsmittel (20) einer Siebung unterzogen werden, um die groben Elemente von den feinen Elementen zu trennen.

13. Verfahren nach einem der Ansprüche 1 bis 12, wobei die groben Elemente auf ein Laufband geleitet werden, auf welchem ein Magnet (9) angeordnet wird, um die eisenhaltigen Bestandteile daraus zu entnehmen und zu entfernen.

14. Verfahren nach einem der Ansprüche 1 bis 13, wobei die metallischen Nichteisenelemente mittels eines Polrads (10) umgeleitet werden, das sich am Ende des Förderbandes befindet, und von einer Ablenkplatte aufgenommen werden, die winkel- und höhenverstellbar ist.

15. Verfahren nach einem der Ansprüche 1 bis 14, wobei nach dem Abtrennen der Metalle die verbleibenden groben Inertstoffe und unzureichend erhitzten Stoffe in ein Sortierbecken (12) geleitet werden, um die absinkenden groben Inertstoffe von den aufschwimmenden unzureichend erhitzten Stoffe zu trennen.

16. Verfahren nach Anspruch 15, wobei die groben Inertstoffe aus ihren Sortierbecken (12) mit Hilfe eines Entnahmemittels entnommen werden, das im Gegenstrom übergossen wird, um die groben Inertstoffe von Kohlenstoff zu reinigen, welcher anhaften bleiben könnte, wobei die aufschwimmenden Inertstoffe wiederum nach dem Durchlaufen eines Mahlwerks (14) zum Beginn des Verfahrens oder zum Startpunkt der Thermolyse zurückgeführt werden.

17. Verfahren nach einem der Ansprüche 1 bis 16, wobei die feine Mischung aus pulverförmigem Kohlenstoff und feinen Inertstoffen, welche durch die verschiedenartigen Siebungsmittel hindurchgeht, zusammen mit Wasser in ein Absetzbecken (21) eingeleitet wird, um das Wasser zu klären, welches wiederverwendet werden kann.

18. Verfahren nach Anspruch 17, wobei der Inhalt des Bodens des Absetzbeckens zum Abpumpen oder durch Schwerkraft in ein Homogenisierungsbecken (32) geleitet wird, das mit einem Rührsystem versehen ist.

19. Verfahren nach einem der Ansprüche 1 bis 18, wobei dem Homogenisierungsbecken (32) ein Zusatzstoff zugesetzt wird, um die sehr feinen feststofflichen Partikel auszuflocken, sodass im weiteren Verlauf ein Verstopfen des Wasserentzugsmittels vermieden wird.

20. Verfahren nach Anspruch 19, wobei der Inhalt des Homogenisierungsbeckens (32) vollständig oder teilweise einem Wasserentzugsmittel (33) zugeführt wird, das entweder eine Filter- oder eine Zentrifugenwirkung hat, um seinen Wassergehalt auf weniger als 45 % zu verringern.

21. Verfahren nach einem der Ansprüche 1 bis 20, wobei der Inhalt des Homogenisierungsbeckens (32) einem Wasserentzugsmittel (33) zugeführt wird, wenn die Konzentration des Beckens an Feststoffen mindestens 30 Gramm pro Liter beträgt, um einen wirkungsvollen mechanischen Wasserentzug zu ermöglichen.
